# FASCICULE DE BREVET EUROPEEN

(11) **EP 1 375 127 B1**
(45) Date de publication et mention de la délivrance du brevet: **13.06.2007**
(21) Numéro de dépôt: 02405517.0
(22) Date de dépôt: 21.06.2002
(51) Int. Cl.: B32B 3/00, B65D 65/38

(54) **Marquage en relief**
Relief-Markierung
Marking in relief

(43) Date de publication de la demande: 02.01.2004
(73) Titulaire: Philip Morris Products S.A., 2000 Neuchâtel (CH)
(72) Inventeur: Ancona, Teresa, 1260 Nyon (CH); Manganelli, Tony, 1007 Lausanne (CH)
(74) Mandataire: BOVARD AG

(56) Documents cités:
- EP-A- 0 407 615
- EP-A- 0 667 244
- DE-A- 3 213 315

## Description

L'invention se rapporte à un matériau qui constitue un emballage tel un réceptacle, une garniture intérieure pour réceptacle, un sur-emballage pour réceptacle, ce matériau étant constitué d'au moins une première et une seconde feuille, comportant chacune deux faces opposées dont au moins une est destinée à porter des informations imprimées lisibles, constituant par exemple un texte.

Le matériau de l'invention peut être utilisé pour constituer au moins une partie d'un emballage, comprenant un réceptacle telle une boîte ou un coffret.

Par exemple, le matériau peut être utilisé pour constituer le réceptacle lui-même et/ou une garniture intérieure de ce réceptacle, voire un sur-emballage.

L'invention intéresse toute application dans laquelle un emballage de dimensions réduites doit comporter de nombreuses informations imprimées, c'est-à-dire des informations constituant, par exemple, un texte, ou une image qu'une personne voyante peut lire et/ou observer.

L'invention s'applique avantageusement, mais non limitativement à l'emballage de produits de l'industrie du tabac.

Il est connu EP-A-0 667 244, de constituer un signe informatif qui, destiné à être associé à un emballage ou à une marchandise, comprend, d'une part, des informations imprimées lisibles, destinées aux personnes voyantes et, d'autre part, des informations constituées sous forme de reliefs en matière transparente, destinées aux personnes non-voyantes, les informations lisibles et les informations constituées sous forme de reliefs étant superposées sur le même support.

Cette solution ne permet pas d'augmenter la quantité d'informations qui, portées par une même surfaces, sont lisibles par une personnes voyante.

Un résultat que l'invention vise à obtenir est un matériau qui constitue un emballage qui, constitué d'au moins deux feuilles, permet de porter un nombre d'informations lisibles par une personne qui est accru par rapport au nombre d'informations lisibles que permet de porter un matériau classique.

A cet effet, l'invention a pour objet un matériau pour emballage selon la revendication 1.

L'invention a également pour objet :
- un emballage comprenant un réceptacle qui est au moins en partie constitué avec le matériau précité,
- une garniture intérieure pour réceptacle qui est au moins en partie constituée avec le matériau précité,
- un sur-emballage pour réceptacle qui est au moins en partie constitué avec le matériau précité.

L'invention sera bien comprise à la lecture de la description ci-après faite, à titre d'exemple non limitatif, en regard du dessin ci-annexé qui représente schématiquement:
Figure 1 : une vue d'une des faces d'un matériau selon l'invention,
Figure 2 : une vue en coupe du matériau de la figure 1, selon une première forme de réalisation,
Figure 3 : une vue en coupe du matériau de la figure 1, selon une deuxième forme de réalisation,
Figure 4 : une vue en coupe du matériau de la figure 1, selon une troisième forme de réalisation,
Figure 5 : une vue en coupe du matériau de la figure 1, selon une quatrième forme de réalisation,

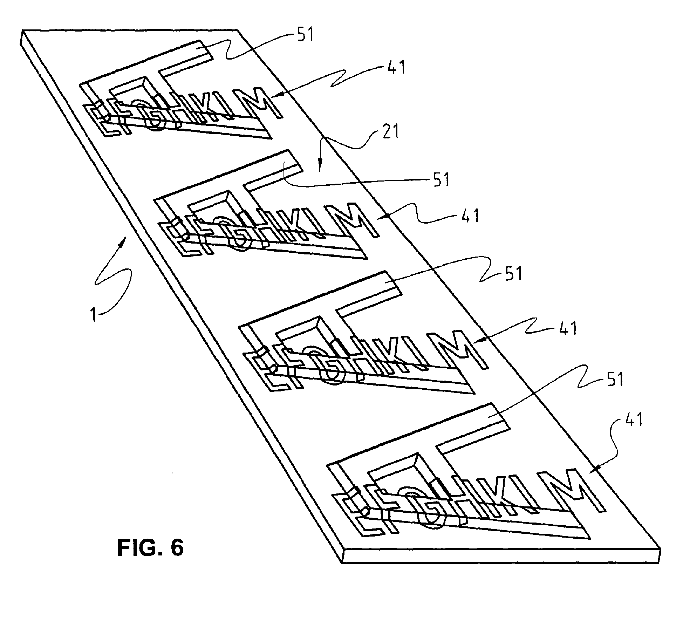

Figure 6 : une vue en perspective d'une face d'un matériau selon l'invention.

En se reportant au dessin, on voit un matériau 1 constitué d'au moins une première 2 et une seconde 3 feuille, comportant chacune deux faces opposées 21, 22, 31, 32, dites faces avant 21, 31 et faces arrière 22, 32, au moins une 21, 31 de ces faces étant destinée à porter des informations imprimées 4 lisibles, constituant par exemple un texte 4.

Tel que cela a déjà été précisé, par informations imprimées 4, on désigne des informations constituant un texte, ou une image qu'une personne voyante peut observer.

Par exemple, les informations imprimées sont constituées par dépôt d'encre, mais cela n'est pas limitatif. Les informations dites imprimées peuvent également consister en une photographie, un dessin, une combinaison de textes, d'images.

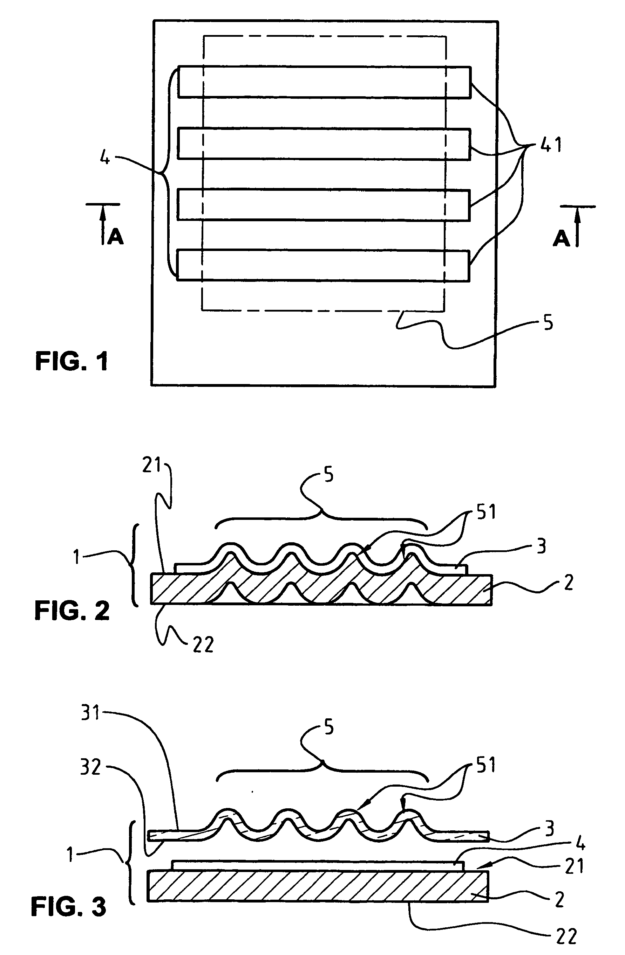

Sur le dessin annexé, en figure 1, on a représenté une vue du matériau qui permet d'observer notamment la face 21 imprimée.

Tel que cela a été symbolisé, les informations imprimées 4 sont par exemple des lignes 41 de caractères constituant un texte 4 lisible.

De manière remarquable (figures 1 et 2), en plus des informations imprimées 4, au moins une desdites faces avant 21, 31 porte des informations 5 lisibles qui, distinctes desdites informations imprimées 4, sont constituées sous forme de reliefs 51, ci-après dites informations en relief 5 qui apparaissent comme étant superposées aux informations imprimées 4 lisibles.

Tel que cela a été symbolisé, les informations en relief 5 sont par exemple constituées par un groupe 5 de lignes de caractères 51 en relief constituant un texte 5 lisible.

Les figures 2 à 5 sont des coupes transversales de la figure 1 selon le plan AA.

Par exemple, les informations en relief 5 sont constituées par déformation locale, selon l'épaisseur d'au moins une des première et seconde feuilles 2, 3.

Cette technique de déformation locale est par exemple la technique connue sous le nom de gaufrage.

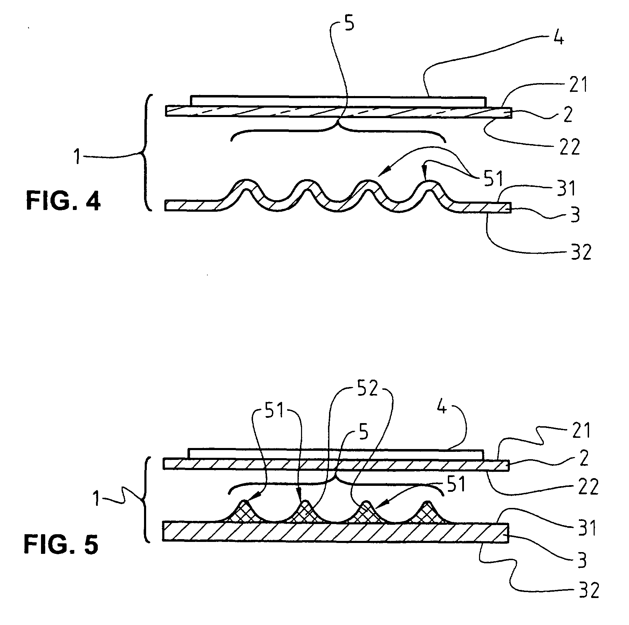

Selon une autre forme de réalisation (figure 5), les informations en relief 5 sont constituées par apport d'un élément en relief 52 sur au moins une desdites faces avant 21, 31 d'au moins une desdites première et seconde feuilles 2, 3.

L'élément en relief 52 peut être de tout type connu et par exemple consister en un apport d'encre ou un apport de substance thermofusible.

L'épaisseur de la déformation ou de l'apport de matière doit être suffisant pour constituer un relief lisible.

L'homme du métier est à même de déterminer la nature de la substance constituant chaque élément en relief ainsi que son épaisseur, sans avoir à faire preuve d'invention.

Suivant une autre forme de réalisation, les informations en relief 5 sont constituées par modification locale de l'état de surface d'au moins une desdites faces avant 21, 31 d'au moins une desdites première et seconde feuilles 2, 3.

La modification locale de l'état de surface résulte d'un polissage localisé, ou à l'inverse d'un dépolissage localisé.

Le terme relief a donc un sens très large. L'essentiel est que la manière dont les informations en relief sont constituées n'altère pas la lisibilité des informations dites imprimées.

L'homme du métier est à même de déterminer la technique la plus adaptée pour obtenir ce polissage ou ce dépolissage localisé.

D'une autre manière remarquable (figure 3), le matériau 1 comprend au moins deux feuilles 2, 3 constituées par lesdites première et seconde feuilles 2, 3 dont :
- ladite première feuille 2 qui est constituée en matière opaque et dont ladite face avant 21 porte les informations imprimées 4,
- ladite seconde feuille 3 est constituée en matière transparente et
   - d'une part, dont au moins ladite face avant 31 porte les informations en relief 5, et
   - d'autre part, est superposée à la face avant 21 de la première feuille 2 qui porte les informations imprimées 4.

Les informations imprimées 4 sont donc observables à travers la feuille 3 qui, constituée en matière transparente, porte quant à elle les informations en relief 5.

Les deux feuilles 2, 3 peuvent être assemblées (figure 2) ou simplement superposées (figures 3 à 5).

Sur les dessins, notamment les épaisseurs des feuilles 2, 3 ont été notablement accrues de manière à faciliter la lecture, mais cela n'a pas de caractère limitatif.

D'une manière différente (figure 4), mais également remarquable, le matériau 1 comprend au moins deux feuilles 2, 3 constituées par lesdites première et seconde feuilles 2, 3 dont :
- ladite seconde feuille 3 qui est constituée en matière opaque et dont ladite face avant (31) porte les informations en relief 5,
- ladite première feuille 2 est constituée en matière transparente et souple,
   - porte les informations imprimées 4 au moins sur sa face avant 21, et
   - est superposée à la face avant 31 de ladite seconde feuille 3 qui porte les informations en relief 5.

Les deux feuilles 2, 3 peuvent également être assemblées ou simplement superposées.

Selon une variante également remarquable (figure 5), le matériau 1 comprend au moins deux feuilles 2, 3 constituées par lesdites première et seconde feuilles 2, 3 dont :
- ladite seconde feuille 3 qui est constituée en matière opaque et dont ladite face avant 31 porte les informations en relief 5,
- ladite première feuille 2 est constituée en matière opaque et souple, et
   - porte les informations imprimées 4 au moins sur sa face avant 21 et,
   - est étroitement superposée à la face avant 31 de ladite seconde feuille 3 qui porte les informations en relief 5.

Dans ce cas, les feuilles sont étroitement appliquées l'une sur l'autre de manière telle que les informations en relief apparaissent effectivement à travers la feuille 2 constituée en matière opaque et souple.

Bien que cela n'apparaisse pas de manière flagrante à l'examen des dessins, l'invention a également pour objet un emballage comprenant un réceptacle telle une boîte ou un coffret et dont au moins une partie est constituée dans le matériau précité.

Par exemple, le matériau est utilisé pour constituer :
- une paroi de réceptacle,
- une garniture intérieure de ce réceptacle,
- un produit de sur-emballage,
- une paroi de réceptacle équipée d'un sur-emballage.

## Revendications

1. Matériau qui constitue un emballage, ce matériau (1) étant constitué d'au moins une première (2) et une seconde (3) feuille, comportant chacune deux faces opposées (21, 22, 31, 32), dites faces avant (21, 31) et faces arrière (22, 32), au moins une (21, 31) de ces faces étant destinée à porter,
. des informations imprimées (4) lisibles, constituant par exemple un texte (4), et
. des informations (5) constituées sous forme de reliefs (51), qui apparaissent comme étant superposées aux informations imprimées (4) lisibles,
ce matériau étant **caractérisé en ce que** les informations (5) constituées sous forme de reliefs (51) sont des informations lisibles qui sont distinctes desdites informations imprimées (4).

2. Matériau selon la revendication 1 **caractérisé en ce que** les informations en relief (5) sont constituées par déformation locale, selon l'épaisseur d'au moins une des première et seconde feuilles (2, 3).

3. Matériau selon la revendication 1 **caractérisé en ce que** les informations en relief (5) sont constituées par apport d'un élément en relief (52) sur au moins une desdites faces avant (21, 31) d'au moins une desdites première et seconde feuilles (2, 3).

4. Matériau selon la revendication 1 **caractérisé en ce que** les informations en relief (5) sont constituées par modification locale de l'état de surface d'au moins une desdites faces avant (21, 31) d'au moins une desdites première et seconde feuilles (2, 3).

5. Matériau selon l'une des revendications 1 à 4, **caractérisé en ce qu'**il comprend au moins deux feuilles (2, 3) constituées par lesdites première et seconde feuilles (2, 3) dont :
- ladite première feuille (2) qui est constituée en matière opaque et dont ladite face avant (21) porte les informations imprimées (4),
- ladite seconde feuille (3) est constituée en matière transparente et
. d'une part, dont au moins ladite face avant (31) porte les informations en relief (5), et
. d'autre part, est superposée à la face avant (21) de la première feuille (2) qui porte les informations imprimées (4).

6. Matériau selon l'une des revendications 1 à 4, **caractérisé en ce qu'**il comprend au moins deux feuilles (2, 3) constituées par lesdites première et seconde feuilles (2, 3) dont :
- ladite seconde feuille (3) qui est constituée en matière opaque et dont ladite face avant (31) porte les informations en relief (5),
- ladite première feuille (2) est constituée en matière transparente et souple,
. porte les informations imprimées (4) au moins sur sa face avant (21), et
. est superposée à la face avant (31) de ladite seconde feuille (3) qui porte les informations en relief (5).

7. Matériau selon l'une des revendications 1 à 4, **caractérisé en ce qu'**il comprend au moins deux feuilles (2, 3) constituées par lesdites première et seconde feuilles (2, 3) dont :
- ladite seconde feuille (3) qui est constituée en matière opaque et dont ladite face avant (31) porte les informations en relief (5),
- ladite première feuille (2) est constituée en matière opaque et souple, et
. porte les informations imprimées (4) au moins sur sa face avant (21) et,
. est étroitement superposée à la face avant (31) de ladite seconde feuille (3) qui porte les informations en relief (5).

8. Emballage comprenant un réceptacle, **caractérisé en ce que** ce réceptacle est au moins en partie constitué avec un matériau selon l'une quelconque des revendications 1 à 7.

9. Garniture intérieure pour réceptacle **caractérisée en ce qu'**elle est au moins en partie constituée avec un matériau selon l'une quelconque des revendications 1 à 7.

10. Sur-emballage pour réceptacle **caractérisé en ce que** ce sur-emballage est au moins en partie constitué avec un matériau selon l'une quelconque des revendications 1 à 7.

## Claims

1. Material for packaging, this material (1) comprising at least a first (2) and a second (3) sheet, each consisting of two opposing surfaces (21, 22, 31, 32), designated as front surfaces (21, 31) and rear surfaces (22, 32), at least one (21, 31) of these surfaces being designed to bear,
. legible printed data (4) consisting of, for example, a text (4), and
. data (5) in embossed form (51), which appears to have been superimposed on the legible printed data (4),
this material being **characterised in that** the embossed data (5) is legible data which is different from said printed data (4).

2. Material according to claim 1, **characterised in that** the embossed data (5) is formed by local deformation according to the thickness of at least one of the first and second sheets (2, 3).

3. Material according to claim 1, **characterised in that** the embossed data (5) is formed by the provision of one embossed element (52) on at least one of said front surfaces (21, 31) of at least one of said first and second sheets (2, 3).

4. Material according to claim 1, **characterised in that** the embossed data (5) is formed by local alteration of the surface state of at least one of said front surfaces (21, 31) of at least one of said first and second sheets (2, 3).

5. Material according to one of claims 1 to 4, **characterised in that** it comprises at least two sheets (2, 3) consisting of said first and second sheets (2, 3) whereof:
- said first sheet (2) that consists of opaque material and said front surface (21) whereof bears the printed data (4),
- said second sheet (3) that consists of transparent material and
. on the one hand, at least said front surface (31) whereof bears the embossed data (5), and
. on the other hand, is superimposed on the front surface (21) of the first sheet (2) that bears the printed data (4).

6. Material according to one of claims 1 to 4, **characterised in that** it comprises at least two sheets (2, 3) consisting of said first and second sheets (2, 3) whereof:
- said second sheet (3) that consists of opaque material and said front surface whereof (31) carries the embossed data (5),
- said first sheet (2) that consists of transparent and flexible material,
. bears the printed data (4) at least on its front surface (21), and
. is superimposed on the front surface (31) of said second sheet (3) which bears the embossed data (5).

7. Material according to one of claims 1 to 4, **characterised in that** it comprises at least two sheets (2, 3) consisting of said first and second sheets (2, 3) whereof:
- said second sheet (3) that consists of opaque material and said front surface (31) whereof bears the embossed data (5).
- said first sheet (2) that consists of opaque and flexible material, and
. bears the printed data (4) at least on its front surface (21), and
. is closely superimposed on the front surface (31) of said second sheet (3) that bears the embossed data (5).

8. Packaging comprising a receptacle, **characterised in that** this receptacle consists at least in part of a material according to any one of claims 1 to 7.

9. Internal lining for this receptacle, **characterised in that** it consists at least in part of a material according to any one of claims 1 to 7.

10. Outer packaging for a receptacle, **characterised in that** this outer packaging consists at least in part of a material according to any one of claims 1 to 7.

## Patentansprüche

1. Material, das eine Verpackung bildet, wobei das Material (1) mindestens aus einem ersten Blatt (2) und einem zweiten Blatt (3) gebildet wird, von denen jedes zwei voneinander abgewandte Seiten (21, 22, 31, 32) aufweist, die als Vorderseiten (21, 32) und als Rückseiten (22, 32) bezeichnet werden, und mindestens eine Seite (21, 31) dieser Seiten dazu bestimmt ist, Folgendes zu tragen:
. lesbare aufgedruckte Informationen (4), die zum Beispiel einen Text (4) bilden, und
. Informationen (5), die in Form von Reliefs (51) ausgebildet sind, die als über den lesbaren aufgedruckten Informationen (4) liegend erscheinen,
wobei dieses Material **dadurch gekennzeichnet ist, dass** es sich bei den in Form von Reliefs (51) gebildeten Informationen (5) um lesbare Informationen handelt, die sich von den genannten aufgedruckten Informationen (4) unterscheiden.

2. Material nach Anspruch 1, **dadurch gekennzeichnet, dass** die Informationen in Reliefform (5) durch eine stellenweise Verformung entsprechend der Stärke von mindestens einem der ersten oder zweiten Blätter (2, 3) gebildet werden.

3. Material nach Anspruch 1, **dadurch gekennzeichnet, dass** die Informationen in Reliefform (5) durch einen Auftrag eines Reliefelements (52) auf mindestens eine der genannten Vorderseiten (21, 31) mindestens eines der genannten ersten oder zweiten Blätter (2, 3) gebildet werden.

4. Material nach Anspruch 1, **dadurch gekennzeichnet, dass** die Informationen in Reliefform (5) durch stellenweise Änderung des Oberflächenzustands von mindestens einer der genannten Vorderseiten (21, 31) mindestens eines der genannten ersten oder zweiten Blätter (2, 3) gebildet werden.

5. Material nach einem der Ansprüche 1 bis 4, **dadurch gekennzeichnet, dass** es mindestens zwei Blätter (2, 3) aufweist, die von den genannten ersten oder zweiten Blättern (2, 3) gebildet werden, darunter:
- das genannte erste Blatt (2), das aus einem undurchsichtigen Material besteht und dessen genannte Vorderseite (21) die aufgedruckten Informationen (4) trägt,
- das genannte zweite Blatt (3), das aus einem durchsichtigen Material besteht, und
. von dem einerseits zumindest die genannte Vorderseite (31) die Informationen in Reliefform (5) trägt und
. das andererseits auf der Vorderseite (21) des ersten Blattes (2) liegt, welche die aufgedruckten Informationen (4) trägt.

6. Material nach einem der Ansprüche 1 bis 4, **dadurch gekennzeichnet, dass** es mindestens zwei Blätter (2, 3) aufweist, die von den genannten ersten oder zweiten Blättern (2, 3) gebildet werden, darunter:
- das genannte zweite Blatt (3), das aus einem undurchsichtigen Material besteht und dessen genannte Vorderseite (31) die Informationen in Reliefform (5) trägt,
- das genannte erste Blatt (2), das aus einem durchsichtigen und biegsamen Material besteht,
. das zumindest auf seiner Vorderseite (21) die aufgedruckten Informationen (4) trägt, und
. das auf der Vorderseite (31) des genannten zweiten Blattes (3) liegt, welche die Informationen in Reliefform (5) trägt.

7. Material nach einem der Ansprüche 1 bis 4, **dadurch gekennzeichnet, dass** es mindestens zwei Blätter (2, 3) aufweist, die von den genannten ersten oder zweiten Blättern (2, 3) gebildet werden, darunter:
- das genannte zweite Blatt (3), das aus einem undurchsichtigen Material besteht, und dessen genannte Vorderseite (31) die Informationen in Reliefform (5) trägt,
- das genannte erste Blatt (2), das aus einem undurchsichtigen und biegsamen Material besteht und
. zumindest auf seiner Vorderseite (21) die aufgedruckten Informationen (4) trägt, und
. eng auf der Vorderseite (31) des genannten zweiten Blattes (3) liegt, welche die Informationen in Reliefform (5) trägt.

8. Verpackung, die einen Behälter aufweist, **dadurch gekennzeichnet, dass** dieser Behälter zumindest teilweise aus einem Material nach einem der Ansprüche 1 bis 7 ausgeführt wurde.

9. Innenauskleidung für Behälter, **dadurch gekennzeichnet, dass** sie zumindest teilweise aus einem Material nach einem der Ansprüche 1 bis 7 ausgeführt wurde.

10. Umverpackung für Behälter, **dadurch gekennzeichnet, dass** diese Umverpackung zumindest teilweise aus einem Material nach einem der Ansprüche 1 bis 7 ausgeführt wurde.
